# EUROPEAN PATENT APPLICATION

(11) **EP 2 096 408 A2**
(43) Date of publication of application: **02.09.2009**
(21) Application number: 08251583.4
(22) Date of filing: 30.04.2008
(51) Int. Cl.: G01C 19/64

(54) **Fiber optic gyroscope with integrated light source**

(30) Priority: 22.05.2007 US 805120
(71) Applicant: Northrop Grumman Guidance and Electronics Company, Inc., Los Angeles, CA 90067-2101 (US)
(72) Inventor: Meyer, Douglas A., Woodland Hills, CA 91367 (US); Yahalom, Rom, Sharon, MA 02067 (US)
(74) Representative: Mackenzie, Andrew Bryan

(57) **Abstract**

An integrated module (22) for a fiber optic gyroscope system (20) includes a fiber optic sensing coil (54) arranged to sense rotations about a sensing axis via the Sagnac effect comprises a substrate (24), a rare earth doped polymer optical waveguide (26) formed on the substrate (24) and a light source (38). The light source (38) and the optical waveguide (26) are arranged to produce counterpropagating light waves in the fiber optic sensing coil (54). The light source (38) may be formed as a rare earth doped polymer waveguide or as a rare earth doped glass waveguide.

## Description

Background of the Invention

This invention relates generally to optical waveguides and particularly to optical polymer waveguides and the use of such waveguides in fiber optic rotation sensor systems.

Optical fibers doped with rare earth ions such as erbium, praseodymium and neodymium are well-known. Optical amplifiers, superfluorescent light sources and fiber lasers have been fabricated using doped fiber technology. Fabrication of prior art waveguides requires that the waveguide be formed in an optically transparent substrate. Rare earth ions are then diffused into the waveguide region of the substrate. The prior art process is time consuming and requires many steps in which process errors could occur.

Summary of the Invention

This invention uses rare earth doped optical polymer waveguides and modulators. Advantages of this over other doped waveguides are in the method of fabrication and the close index of refraction match to that of the optical fiber.

Fabrication of a doped polymer waveguide should prove to be simpler, have shorter fabrication time, have less potential for error and be less costly than fabrication of prior art waveguides.

An integrated module for a fiber optic gyroscope system that includes a fiber optic sensing coil arranged to sense rotations about a sensing axis via the Sagnac effect comprises a substrate, an optical waveguide formed on the substrate, a light source comprising a doped waveguide formed on the substrate, the light source and the optical waveguide being arranged to produce counterpropagating light waves in the fiber optic sensing coil and a plurality of electrodes formed on the substrate to form a phase modulator for modulating the phase of light waves in the fiber optic sensing coil.

The light source may be formed to comprise a rare earth doped polymer waveguide and a pump light source optically coupled to the rare earth doped polymer waveguide. The light source may also comprise a first optical reflector located at a first end of the rare earth doped polymer waveguide and a second optical reflector located at a second end of the rare earth doped polymer waveguide, the second optical reflector being partially transmissive to allow an optical signal to be output from the rare earth doped optical waveguide. The first and second optical reflectors may be formed as mirrors or Bragg gratings.

The light source may alternatively comprise a rare earth doped polymer waveguide having a first end and a second end, an optical coupler arranged to couple light into the rare earth doped polymer waveguide between the first and second ends thereof and a pump light source arranged to provide pump light to the optical coupler for input to the rare earth doped polymer waveguide. The light source further includes a first Bragg grating arranged to function as an optical reflector located near the first end of the rare earth doped polymer waveguide and a second Bragg grating arranged to function as an optical reflector located between the first end of the rare earth doped polymer waveguide and the optical coupler, the second Bragg grating being partially transmissive to allow an optical signal to be output from the rare earth doped optical waveguide.

The integrated module of claim 7, further comprising a temperature control device arranged to control the temperature of the second Bragg grating to maintain wavelength stability and to tune the module to a selected wavelength.

The light source may comprise a rare earth doped glass waveguide and a pump light source optically coupled to the rare earth doped glass waveguide. An optical coupler may be formed on the substrate between the pump light source and the rare earth doped glass waveguide and a wavelength division multiplexer may be formed on the substrate between the optical coupler and the rare earth doped glass waveguide such that an optical signal formed in the rare earth doped glass waveguide propagates to the wavelength division multiplexer. The light source may further include an optical isolator optically coupled to the wavelength division multiplexer to receive the optical signal therefrom and an optical signal splitter coupled to the optical isolator and arranged to provide optical signals to a plurality of fiber optic sensing coils.

Brief Description of the Drawings

FIG. 1 illustrates a first embodiment of a fiber optic gyroscope according to the present invention;

FIG. 2 illustrates a second embodiment of a fiber optic gyroscope according to the present invention;

FIG. 3 illustrates a third embodiment of a fiber optic gyroscope according to the present invention;

FIG. 4 illustrates a straight channel rare earth doped polymer waveguide (REDPW) connected to an optical pump to form a light source that may be included in a fiber optic gyroscope according to the present invention;

FIG. 5 illustrates light source that includes a reverse pumped REDPW using a 3 dB splitter to form a light source that may be included in a fiber optic gyroscope according to the present invention;

FIG. 6 illustrates a REDPW laser configuration using mirrors to form a gain cavity to form a light source that may be included in a fiber optic gyroscope according to the present invention;

FIG. 7 shows a REDPW laser configuration using a first arrangement of Bragg gratings to form a gain cavity to form a light source that may be included in a fiber optic gyroscope according to the present invention;

FIG. 8 shows a REDPW laser configuration using a second arrangement of Bragg gratings to form a gain cavity to form a light source that may be included in a fiber optic gyroscope according to the present invention; and

FIG. 9 shows a REDPW laser configuration using a mirror and a Bragg grating to form a laser cavity to form a light source that may be included in a fiber optic gyroscope according to the present invention.

Detailed Description of the Invention

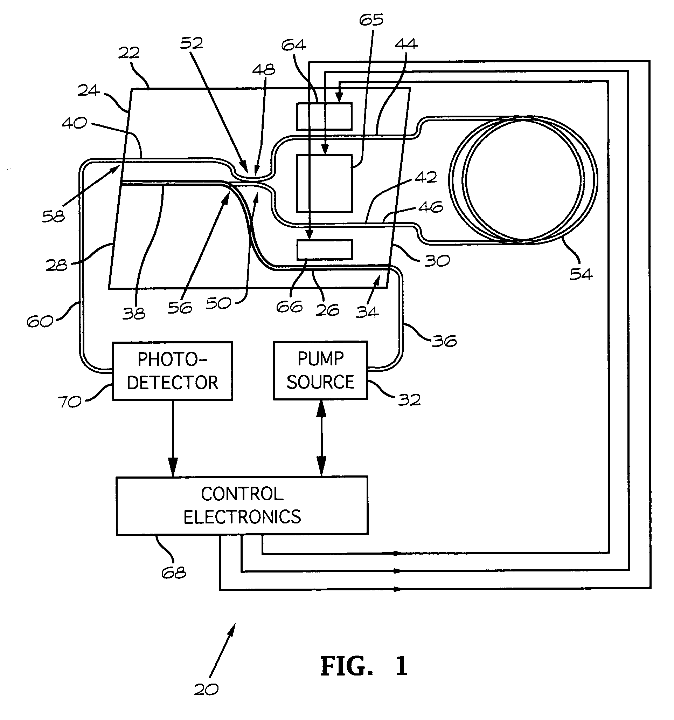

Referring to FIG. 1, a fiber optic gyroscope 20 includes a module 22 formed on a polymer substrate 24. A first portion of the polymer substrate 24 is doped with a rare earth material to form a rare earth doped polymer waveguide (REDPW) 26. The REDPW 26 extends across the substrate 24 between opposite edges 28 and 30 thereof. A pump light source 32 is connected to an end 34 of the REDPW 26 by an optical fiber 36. The pump light interacts with the REDPW to form an amplified spontaneous emission (ASE) light source 38.

Second and third portions of the substrate 24 are doped to form optical waveguides 40 and 42. The optical waveguides 40 and 42 have portions 44 and 46, respectively, that are preferably parallel. The optical waveguides 40 and 42 also have portions 48 and 50, respectively, that converge together to form an optical coupler 52.

The parallel portions 44 and 46 of the optical waveguides 40 and 42, respectively, are optically coupled to a fiber optic sensing coil 54. An end 56 of the optical waveguide 42 is optically coupled to the REDPW 26. An end 58 of the optical waveguide 40 is optically coupled to an optical fiber 60.

The module 22 also includes a phase modulator 62 that includes electrodes 64-66 formed on the substrate 24. The substrate 24 preferably is formed to comprise polymer chains that have electrooptic activity. These polymer chains are called chromaphores and will react when a suitable voltage is applied. The electrodes 64-66 are connected to a control electronics system 68.

An optical signal from the light source 38 is coupled into the optical waveguide 42. The optical coupler 52 is preferably a 3 dB device that couples half of the source light from the optical waveguide 42 into the optical waveguide 40. The optical signals in the optical waveguides 40 and 42 are input into the fiber optic sensing coil 54 as clockwise and counterclockwise light waves, respectively. When the sensing coil 54 rotates about a sensing axis perpendicular to its plane, the clockwise and counterclockwise waves have different transit times in the sensing coil 54 in accordance with the Sagnac effect. After traversing the sensing coil 54, the clockwise and counterclockwise waves propagate back to the optical coupler 52 where they combine to form an interference pattern. The optical waveguide guides the combined clockwise and counterclockwise waves to the optical fiber 60, which guides them to a photodetector 70. The photodetector 70 produces an electrical signal that may be processed to determine the rotation rate of the sensing coil 54.

Fabrication of polymer waveguide devices uses the same techniques that are used in other photolithic processes. Here the optical waveguides are made from ultraviolet (UV) curable materials that can be photo masked, exposed and cured under UV light to pattern the polymer material to form the optical waveguides. Candidate doping ions include erbium (Er⁺³), neodymium (Nd⁺³) and praseodymium (Pr⁺³) to name a few. These ions are named because they are commonly used as doping materials in the fiber optic industry, but it should not be assumed that these are the only materials that should be considered.

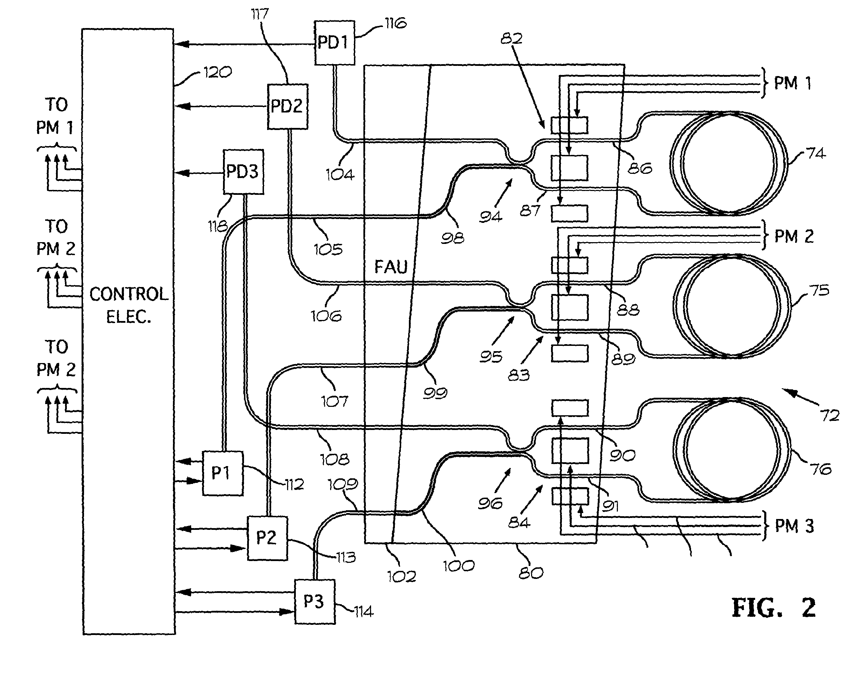

FIG. 2 shows a triaxial fiber optic gyroscope 72 formed according to the present invention. The fiber optic gyroscope 72 includes three fiber optic sensing coils 74-76. It should be understood that the fiber optic sensing coils 74-76 are arranged to sense rotations about three mutually perpendicular axes (not shown). The fiber optic gyroscope 72 includes an integrated optical signal source and phase modulator assembly 78 formed on a polymer substrate 80. The integrated optical signal source and phase modulator assembly 78 includes three phase modulators 82-84, six optical waveguides 86-91, three optical couplers 94-96 and three rare earth doped optical waveguides 98-100 that function as ASE light sources. A fiber optic array unit 102 includes six optical fibers 104-109. The optical fibers 104-106 are optically coupled to the optical waveguides 86, 88 and 90, respectively. The optical waveguides 107-109 are optically coupled to the rare earth doped optical waveguides 98-100, respectively. Pump lasers 112-114 are optically coupled to the optical fibers 107-109. Photodetectors 116-118 are arranged to receive optical signals guided by the optical fibers 104-106. The photodetectors 116-118 provide electrical signals to a control electronics module 120, which is also arranged to control the pump lasers 112-114.

Pump light from the pump lasers 112-114 propagates in the optical fibers 105, 107 and 109, respectively, to the rare earth doped optical waveguides 98-100. The pump light interacts with the rare earth doped optical waveguides 98-100 to cause them to function as ASE light sources. The optical couplers 94-96 divide the ASE light into clockwise and counterclockwise light waves in the sensing coils 74-76. Rotation of the sensing coils 74-76 about their sensing axes causes the counterpropagating waves in each coil to undergo phase shifts in accordance with the Sagnac effect that indicate the respective rotation rates of the coils. The phase shifted waves combine in the coupler after traversing the sensing coils 74-76 and produce output signals in the form of interference patterns. The optical waveguides 86, 88 and 90 guide the output signals from the optical couplers 94-96 to the optical fibers 104-106, which in turn guide the signals to the photodetectors 116-118. The control electronics module receives electrical signals from the photodetectors 116-118 and processes these signals to determine the rotation rates for each of the sensing coils 74-76. The control electronics module 120 also sends signals to the phase modulators 82-84 (also designated PM1, PM2 and PM3) to null the phase differences of the clockwise and counterclockwise waves in each of the three sensing coils 74-76.

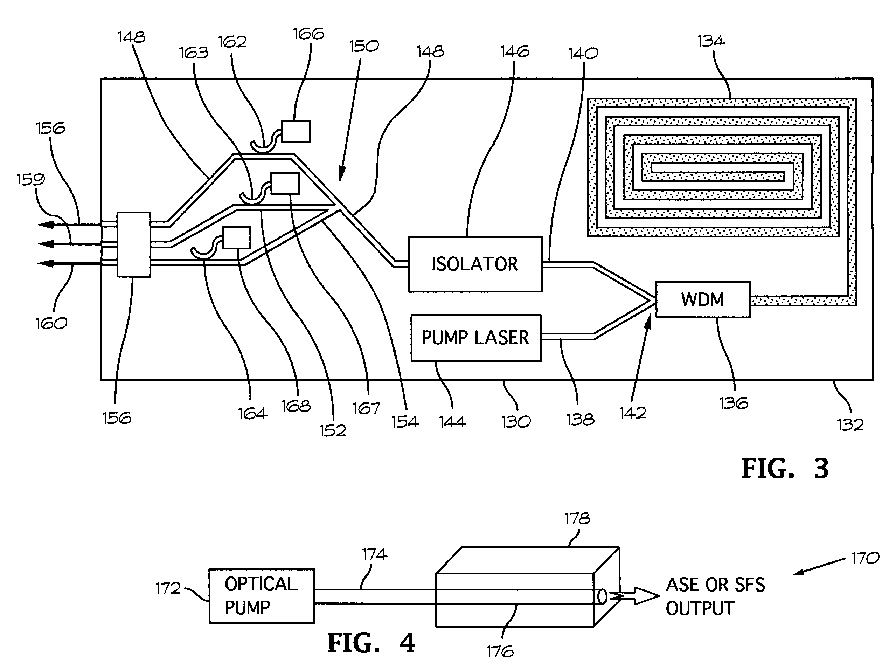

FIG. 3 illustrates a module 130 that may be used in forming a fiber optic gyroscope according to the present invention. The module 130 may be formed on a substrate 132 comprising a doped glass, which may be silica on silicon. The module 130 may include an erbium doped waveguide 134, a wavelength division multiplexer (WDM)136, a pair of waveguides 138 and 140 that intersect at a junction 142 and a pump laser 144. The optical waveguides formed on the substrate 132 are preferably formed as compact planar light wave circuits, which are well-known in the art. The pump laser 144 provides pump light to the optical waveguide 138, which then guides the pump light to the WDM 136. The WDM 136 is optically coupled to the erbium doped waveguide 134. The pump light causes the erbium doped waveguide to function as an ASE optical signal source. The light emitted in the erbium doped waveguide 134 propagates through the WDM 136 to the optical waveguide 140.

The optical waveguide 140 guides the optical signal from the WDM 136 to an optical isolator 146 that may be formed on the substrate 132. The optical isolator 146 allows only one-way propagation of the optical signal. After passing through the optical isolator 146, the optical signal propagates through an optical waveguide 148 to a junction 150, which functions as a 1 x 3 optical coupler. Approximately one third of the optical signal intensity remains in the optical waveguide 148 with the remainder being divided between two optical waveguides 152 and 154.

The optical waveguides 148, 152 and 154 each guide an optical signal to a Bragg grating 156 formed on the substrate 132. After propagating beyond the Bragg grating 156, the optical signals are coupled out of the optical waveguides 148, 152 and 154 into corresponding optical fibers 158-160 for input to fiber optic sensing coils as shown in FIG. 2.

Signals returned from the sensing coils couple from the optical waveguides 148, 152 and 154 into optical waveguides 162-164 and are then detected by photodetectors 166-168. Electrical signals output from the photodetectors 166-168 may be processed by an electronics control module as explained previously with respect to FIG. 2 to determine the rotation rates about three mutually perpendicular sensing axes.

FIGS. 4-9 illustrate various configurations including rare earth polymer waveguides for optical signal sources that are suitable for use in fiber optic gyroscope rotation sensor systems. Referring to FIG. 4, a light source 170 includes an optical pump 172 arranged to inject pump light into an optical waveguide 174. The pump light propagates in the optical waveguide 174 to a rare earth doped polymer waveguide 176 formed in a polymer substrate 178. The pump light interacts with the dopant to produce an amplified spontaneous emission or a superfluorescent optical signal output

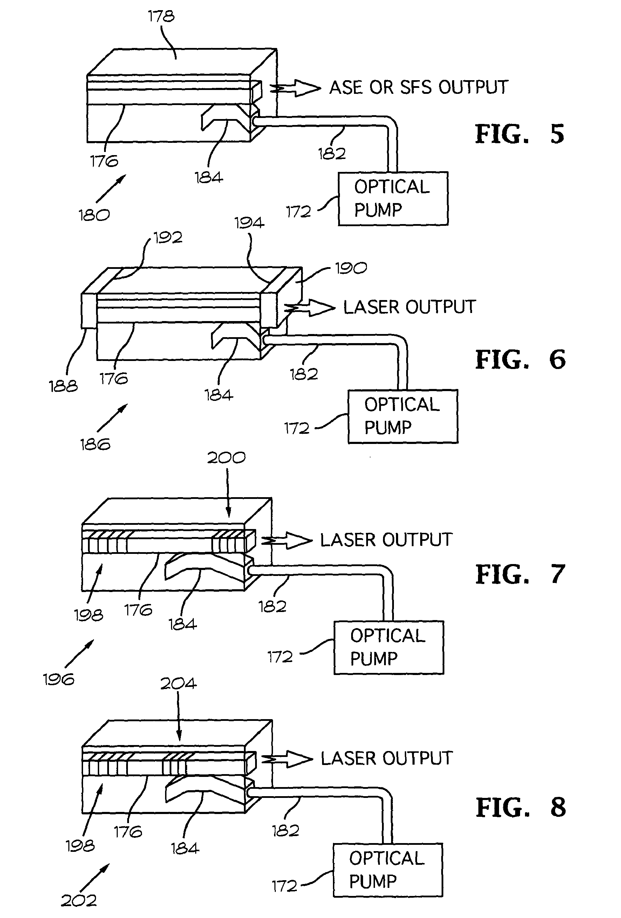

FIG. 5 shows a reverse pumped light source 180. An optical waveguide 182 guides pump light from the optical pump 172 to an optical coupler in the polymer substrate 178. The pump light couples into the rare earth doped polymer waveguide 176 to produce an optical output as described previously with reference to FIG. 4. The pump light in the light source 180 propagates opposite in direction from the optical output and is not included in the optical output of the light source 180.

Referring to FIG. 6, a reverse pumped narrow linewidth laser source 186 includes mirrors 188 and 190 arranged to terminate the ends 192 and 194 of the rare earth doped polymer waveguide 176. The mirror 188 has very high reflectivity whereas the mirror 190 is partially transmissive. The mirrors 188 and 190 confine modes of the emitted light and allow the selection of only a few lasing modes to pass through the mirror 190 as the laser output.

Referring to FIG. 7, a reverse pumped laser configuration 196 uses a pair of Bragg gratings 198 and 200 located near the ends of the rare earth doped polymer waveguide 176 to form a gain cavity. The Bragg grating 200 allows laser light to exit the gain cavity.

FIG. 8 shows a reverse pumped laser configuration 202 having the Bragg grating 198 located near an end of the rare earth doped polymer waveguide 176 as in FIG. 7. A second Bragg grating 204 is arranged such that the optical coupler 184 is between it and the output end of the rare earth doped polymer waveguide 176.

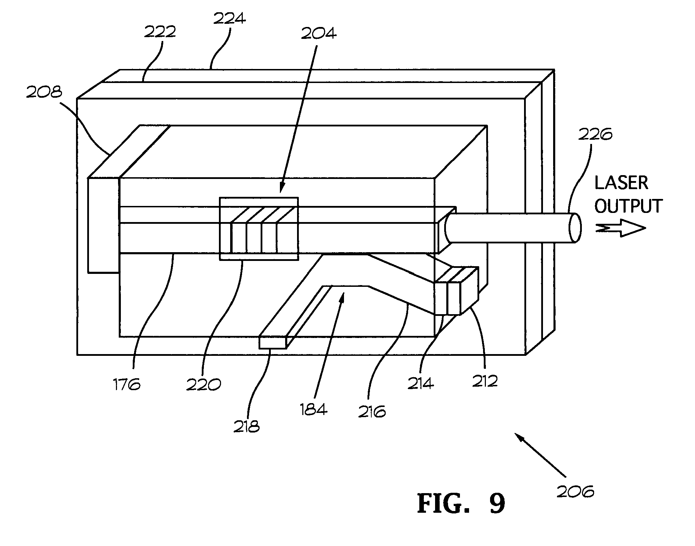

FIG. 9 shows a reverse pumped laser configuration 206 that includes a mirror 208 at and end of the rare earth doped polymer waveguide 176 and the Bragg grating 204 arranged as shown in FIG. 8 between the mirror 208 and the optical coupler 184. The mirror 208 and the Bragg grating 204 define the lasing cavity with the Bragg grating 204 also being used to select the wavelength that is output from the cavity as the laser beam. The laser 206 may also include a small thermoelectric device 210 that may be used to control the temperature of the Bragg grating 204 to maintain wavelength stability and to tune the laser to selected wavelengths.

The coupler 184 is formed to couple light from an optical waveguide 216 into the rare earth doped polymer waveguide 176. A pump light source 212 is arranged to provide pump light to the optical waveguide 216. An isolator 214 may be located between the pump source 212 and the optical waveguide 216. A photodetector 218 may be arranged to receive part of the pump light from the optical waveguide 216 to monitor the intensity of the pump source. The laser output may be coupled to a fiber optic pigtail.

The components of the laser 206 may be mounted on a thermoelectric device 222 that is arranged to provide temperature control of the laser 206. The thermoelectric device 222 may be mounted on a base 224 formed of silicon or other suitable material.

## Claims

1. An integrated module (20) for a fiber optic gyroscope system that includes a fiber optic sensing coil (54) arranged to sense rotations about a sensing axis via the Sagnac effect comprising:
a substrate (24);
a rare earth doped optical waveguide (26) formed on the substrate (24);
a light source (38) comprising the doped waveguide (26), the light source (38) and the optical waveguide (26) being arranged to produce counterpropagating light waves in the fiber optic sensing coil (54); and
a plurality of electrodes (64-66) formed on the substrate (24) to form a phase modulator (62) for modulating the phase of light waves in the fiber optic sensing coil (54).

2. The integrated module (20) of claim 1 including a light source (180) wherein that includes a rare earth doped optical waveguide (176) comprises a polymer and a pump light source (172) optically coupled to the rare earth doped polymer waveguide (176).

3. The integrated module (20) of claim 1 including a light source (186) that includes:
a rare earth doped polymer optical waveguide (176);
a pump light source (172) optically coupled to the rare earth doped polymer waveguide (176);
a first optical reflector (188) located at a first end (192) of the rare earth doped polymer waveguide (176); and
a second optical reflector (190) located at a second end (194) of the rare earth doped polymer waveguide (176), the second optical reflector (190) being partially transmissive to allow an optical signal to be output from the rare earth doped optical waveguide (176).

4. The integrated module of claim 1 wherein the first and second optical reflectors (188, 190) are formed as mirrors.

5. The integrated module of claim 1 wherein the first and second optical reflectors (188,190) are formed as Bragg gratings (196, 200).

6. The integrated module (20) of claim 1 wherein the light source (38) comprises:
a rare earth doped polymer waveguide (176) having a first end (192) and a second end (194);
an optical coupler (184) arranged to couple light into the rare earth doped polymer waveguide (176) between the first and second ends (192, 194) thereof;
a pump light source (172) arranged to provide pump light to the optical coupler (184) for input to the rare earth doped polymer waveguide (176);
a first Bragg grating (198) arranged to function as an optical reflector located near the first end (188) of the rare earth doped polymer waveguide (176); and
a second Bragg grating (200) arranged to function as an optical reflector located near the second end (194) of the rare earth doped polymer waveguide (176), the second Bragg grating (200) being partially transmissive to allow an optical signal to be output from the rare earth doped optical waveguide (176).

7. The integrated module (20) of claim 1 wherein the light source (38) comprises:
a rare earth doped polymer waveguide (176) having a first end (192) and a second end (194);
an optical coupler (184) arranged to couple light into the rare earth doped polymer waveguide (176) between the first and second ends (192, 194) thereof;
a pump light source (172) arranged to provide pump light to the optical coupler (184) for input to the rare earth doped polymer waveguide (176);
a first Bragg grating (198) arranged to function as an optical reflector located near the first end (192) of the rare earth doped polymer waveguide (176); and
a second Bragg grating (200) arranged to function as an optical reflector located between the first end (192) of the rare earth doped polymer waveguide (176) and the optical coupler (184), the second Bragg grating (200) being partially transmissive to allow an optical signal to be output from the rare earth doped optical waveguide (176).

8. The integrated module (20) of claim 7, further comprising a temperature control device (210) arranged to control the temperature of the second Bragg grating (200) to maintain wavelength stability and to tune the module (20) to a selected wavelength

9. The integrated module (20) of claim 1 further including:
an optical coupler (142) formed between the pump light source and the rare earth doped glass waveguide (134);
a wavelength division multiplexer (136) between the optical coupler (142) and the rare earth doped glass waveguide such that an optical signal formed in the rare earth doped glass waveguide (134) propagates to the wavelength division multiplexer;
an optical isolator (146) optically coupled to the wavelength division multiplexer (136) to receive the optical signal therefrom; and
an optical signal splitter (150) coupled to the optical isolator (146) and arranged to provide optical signals to a plurality of fiber optic sensing coils.
